# EUROPEAN PATENT APPLICATION

(11) **EP 2 298 079 A1**
(43) Date of publication of application: **23.03.2011**
(21) Application number: 09305770.1
(22) Date of filing: 19.08.2009
(51) Int. Cl.: A21D 13/00

(54) **Non-mushy tarte flambée**

(71) Applicant: Raguet, Florence, 74600 Seynod (FR)
(72) Inventor: Raguet, Florence, 74600 Seynod (FR); Becher, Thomas, 80339 München (DE); Breitenstein, Klaus, Dr., 81927 München (DE); Douxchamps, Nicolas, 81827 München (DE)
(74) Representative: HOFFMANN EITLE

(57) **Abstract**

So as to keep the moisture content of the dough for a Flammkuchen recipe at acceptable levels, the invention proposes to modify a traditional recipe by using German beer that is brewed in accordance with the German purity law.

## Description

### TECHNICAL FIELD AND STATE OF THE ART

Flammkuchen or Tarte Flambée is a well-known Alsatian specialty. It is like pizza in that a thin crust of dough is baked in a very hot oven, but its topping is primarily crème fraiche, onions, and bacon.

Like many traditional regional dishes there are innumerable ways of preparing it.

### SUMMARY OF THE INVENTION

This invention is the selection and modification of one example which addresses the technical problem of keeping the moisture content of the underlying dough at acceptable levels so that the Flammkuchen or Tarte Flambée will develop a mouth-watering smell, while the dough will be crispy and the topping will take on a creamy and succulent texture.

### DESCRIPTION OF AN EMBODIMENT

### Ingredients

### Starter ingredients for the dough

1/4 cup of flour
1/4 cup of moderately hot water, about 45°C
1 tablespoon of sugar
1 package of yeast

### Dough

2 cups of all-purpose flour
1 teaspoon of salt
1/4 cup of German beer (brewed in accordance with the purity law)
6 tablespoons (1/4 cup plus 2 tablespoons) of milk

### Covering

2 tablespoons of vegetable oil
1 medium onion (3 ounces), finely chopped
1 cup of crème fraiche, commercial or in accordance with dependent claim 2
1/2 teaspoon of salt
1/4 teaspoon of pepper
4 pinches of nutmeg
3 ounces of diced bacon

The ingredients are processed by means of the method as recited in the appended claims and yield the result outlined in the above Summary of the Invention.

### INDUSTRIAL APPLICABILITY

The process is industrially applicable by automating the manufacturing process. The industrial manufacturing process may include packaging the portioned foodstuff under a conditioned, protective atmosphere.

## Claims

1. Method of making portioned foodstuff, preferably Flammkuchen, comprising the following steps:
a. Mix the starter ingredients for the dough together in a small bowl,
b. cover the bowl tightly,
c. set the covered bowl aside at an ambient temperature of between 30° and 45°C, for 30 minutes.
d. When the starter is light and bubbly, mix the beer and milk into the mixture.
e. Put the flour and salt into a food processor, then, with the food processor running, add the yeast mixture through the feeding tube.
f. Process the dough until it forms a ball.
g. Process the ball for about 45 seconds to 1 minute until it is smooth, elastic, and warm.
h. Butter a bowl, roll the ball around in the butter, then cover and let rise in a warm place until the volume has doubled.
i. Punch down and let rise a second time.
j. While the dough is rising, heat 1 tablespoon of oil in a nonstick skillet.
k. Add the onion and cook, stirring, over low heat for 5 minutes or until golden brown.
l. Let cool.
m. Combine the crème fraiche, salt, pepper, and nutmeg.
n. Add the cooled onion.
o. Heat the remaining oil in the skillet and fry bacon until lightly browned, stirring constantly.
p. Remove and drain through a strainer.
q. Preheat the oven to 220°C for at least 30 minutes.
r. Lightly oil a 14 x 16 inch baking sheet.
s. Roll the dough until slightly smaller than the baking sheet, place it on the sheet.
t. Spread the onion mixture over the dough, leaving a very small raised rim all the way around, then dot with the bacon.
u. Bake for 4 to 20 minutes depending on oven temp.
The method is **characterized in that**
the beer is German beer, brewed in accordance with the German purity law (VorlBierG).

2. Method of making portioned foodstuff as claimed in claim 1, wherein the creme fraiche is prepared by the following steps:
- combine 1 cup heavy cream with 2 tablespoons buttermilk,
- stir,
- cover with plastic wrap,
- leave at room temperature for 12 to 24 hours.

3. Method of making portioned foodstuff as claimed in claim 2, wherein the crème fraiche is refrigerated for it to become thicker.
